# EUROPEAN PATENT APPLICATION

(11) **EP 2 190 268 A1**
(43) Date of publication of application: **26.05.2010**
(21) Application number: 09176553.7
(22) Date of filing: 19.11.2009
(51) Int. Cl.: H05B 41/42, H02J 3/26

(54) **Device and method for controlling a power of several lights**

(30) Priority: 21.11.2008 NL 2002234
(71) Applicant: Kraakman, Hendrikus Johannes, 1461 DE Zuidoostbeemster (NL)
(72) Inventor: Kraakman, Hendrikus Johannes, 1461 DE Zuidoostbeemster (NL)
(74) Representative: Groeneveld, Yme Geert

(57) **Abstract**

A device for controlling a power of several lights is provided. The device has three inputs: a first phase, a second and a third phase input for receiving a power from a first phase, a second phase and third phase voltage from an external power supply. Furthermore, it has several outputs: each output is connected via a switch with a phase input. The switches are grouped and the device is constructed to switch on an substantially equal number of switches as to divide the load of the lights equally over the different phases of the power supply and to distribute the increase (or decrease) of illumination evenly across a room.

## Description

### Field of the invention

The invention relates to the field of electronic switching and more specifically to the use of a device for controlling a power of several lights, comprising a first, a second and a third phase input for receiving a power from a first, a second and a third phase voltage from an external power supply; a first output for connecting a first light via a first phase switch to the first phase input; a second output for connecting a second light via a first phase switch to the first phase input; a third output for connecting a third light via a first phase switch to the first phase input; a fourth output for connecting a fourth light via a second phase switch to the second phase input; a fifth output for connecting a fifth light via a second phase switch to the second phase input; a sixth output for connecting a sixth light via a second phase switch to the second phase input; a seventh output for connecting a seventh light via a third phase switch to the third phase input; an eighth output for connecting an eighth light via a third phase switch to the third phase input; a ninth output for connecting a ninth light via a third phase switch to the third phase input, wherein a substantially equal load is connected to each of the first, second and third switches.

### Background of the invention

In almost every company hallway, shop, office or other rooms, illumination is provided by several electrical lights, such as neon lightning or other types of gaseous discharge lamps. Often daylight can also illuminate these rooms, but its illumination power highly depends on the time of the day, the season, the weather, etc. Therefore, for convenience purposes, lights are often used at full power during working hours, regardless of the daylight illumination. In order to minimize energy costs and the environmental impact of energy use, electrical lights could be switched off when the combined light intensity of the sun and the artificial lights is above a desired level.

In many corporate buildings or factory buildings lights are connected to one of the phases of a three-phase power supply. A light line is a cable comprising three phase cables, each with one of the three phases, a neutral and a ground cable, with lights connected to one of the three phases and both the neutral and the ground cable. Usually two adjacent lights are connected to different phase cables. In many rooms, several light lines are provided to illuminate the entire room.

In the US patent US2008/0191630 systems and methods for improved illumination electrical switching are described. One embodiment relates to a method for electrically switching a light in response to a detected light intensity. The method includes receiving an optical input, identifying natural light intensity within an area and switching on a light so as to generate artificial light necessary to make the combined natural and artificial light intensity equal to a preset value. The reference also describes routing electricity to the electrical light through a dimming switch with a particular impedance level.

In US patent 4242614 a system is disclosed for controlling operation of a plurality of gaseous discharge lamps for selectively turning on or off one or more of the lamps, to provide for conservation of electrical energy. In the system, each of the discharge lamps is connected to a separate variable impedance ballast device, a control circuit for varying the impedance of each ballast device, and a signal processing circuit connected to each control circuit for operating the same, and a signal transmitting device for transmitting information to each of the signal processing circuits, whereby the latter circuits selectively operate the respective control circuits in response to the information received from the signal transmitting device.

The GB patent 2155708 describes a system for controlling the illumination of an environment comprising a monitoring device for monitoring ambient light levels at one or more locations in an environment with an artificial lighting requirement and at least one control device which in use is remote from the monitoring device and includes circuitry arranged to control the level of energisation of a light or lights with which it is associated in accordance with a control signal transmitted by the monitoring device.

A drawback of the system described in GB2155708 is that controlling the level of energisation could result in an uneven distribution of the power consumption per phase, if the level of energisation of lights connected to a first phase is low compared to the level of energisation of lights connected to a second phase.

### Summary of the invention

It would be desirable to provide an improved or an alternative device for controlling a power of several lights.

In order to achieve this, a device for controlling a power of several lights is provided, comprising a first, a second and a third phase input for receiving a power from a first, a second and a third phase voltage from an external power supply; a first output for connecting a first light via a first phase switch to the first phase input; a second output for connecting a second light via a first phase switch to the first phase input; a third output for connecting a third light via a first phase switch to the first phase input; a fourth output for connecting a fourth light via a second phase switch to the second phase input; a fifth output for connecting a fifth light via a second phase switch to the second phase input; a sixth output for connecting a sixth light via a second phase switch to the second phase input; a seventh output for connecting a seventh light via a third phase switch to the third phase input; an eighth output for connecting an eighth light via a third phase switch to the third phase input; a ninth output for connecting a ninth light via a third phase switch to the third phase input, wherein a substantially equal load is connected to each of the first, second and third switches, **characterized in that**, the phase switches are grouped into three groups, wherein each group comprises a first, a second and a third phase switch; the first, fourth and seventh lights are part of a light line; the second, fifth and eighth lights are part of a light line; the third, sixth and ninth lights are part of a light line; the device for controlling a power of several lights is constructed to switch on a substantially equal number of first, second and third phase switches in a group substantially simultaneously.

An advantage of the invention is that the power received from the first phase input equals the power received from the second phase input, because each phase input is loaded by an equal amounts of lights. In other words, the load is balanced. Also the power received from the second phase input equals the power received from the third phase input, because each phase input is loaded by an equal amounts of lights. In other words, the load is balanced among the three phases.

Another advantage of the invention may be that by switching the lights in a group substantially simultaneously the increase (or decrease) of illumination is distributed evenly over the light lines.

In a further embodiment, the switches electronically of mechanically connect electrically each light and its respective phase input when switched on and electrically disconnect when switched off.

In a further embodiment, the device for controlling a power of several lights further comprises a neutral input for receiving a neutral line from the external power supply and a neutral output for connecting each light to the neutral input.

In many corporate buildings, shop and factories power is provided by a three phase power grid, comprising three phase cables, each with one of the three phases, a neutral and an ground cable. An advantage of this further embodiment of the device is that it balances the load of the lights among the three phases.

In a further embodiment, the device for controlling a power of several lights comprises a light intensity input for receiving information about a detected light intensity and a determination device for determining a minimal light intensity and a maximum light intensity, wherein the device for controlling a power of several lights switches an substantially equal number of first phase switches, second phase switches and third phase switches, when the detected light intensity is lower than the minimum light intensity and switches off when the detected light intensity is higher then the maximum light intensity.

An advantage of this embodiment is that lights are only switched on when their illumination is needed to reach a preferred light intensity. For example, when the illumination power of the daylight is increasing, less lights will be needed to reach the minimum light intensity. This will lower energy costs and the environmental impact of energy use.

In a further embodiment, the device for controlling a power of several lights comprises a time information input for receiving information about a measured time, and a input device for inputting a first and a second period, wherein the minimum and maximum light intensity equals respectively a first minimum and a first maximum value, when the measured time is part of the first period, and, the minimum and maximum light intensity equals respectively a second minimum and a second maximum value, when the measured time is part of the second period.

An advantage of this embodiment is that it enables operating the device in two different periods, for example during daytime and during night time. During daytime the preferred light intensity may be higher than during night time. In this way, energy consumption can be further optimized.

In a further embodiment, the device for controlling a power of several lights further comprises a detection input for receiving information about a detected motion and/or sound, wherein the device is constructed to switch on lights when a motion and/or sound detection signal has been received via the detection input.

An advantage of this embodiment is that it enables operating the device in two different situations, for example when employees are detected in the room and when no employees are present in the room. When no employees are present in the room, the preferred light intensity may be lower. In this way, energy consumption can be further optimized.

In a further embodiment, the device for controlling a power of several lights further comprises a input device for inputting a desired light intensity and a margin, wherein the minimum light intensity equals the desired light intensity minus the margin and the maximum light intensity equals the desired light intensity plus the margin.

It may be advantageous to set the minimum light intensity and the maximum light intensity at a different value than the desired light intensity. In this way, the lights will not be constantly switched on and off, when the detected light intensity varies just around the desired value. For convenience reasons, it may be advantageous to input a margin once when installing the device and to input the desired intensity afterwards by the user.

It can be understood that the term "a light" can refer to any kind of electrical illumination and can comprise any number of lights, LEDs, etc.

### Brief description of the drawings

Further advantageous embodiments of the assembly according to the invention are described in the claims and in the following description with reference to the drawing, in which:
Figure 1 shows a schematic overview of a first embodiment of a device for controlling a power of several lights according to the invention;
Figure 2 shows a schematic overview of a further embodiment of the device according to the invention;
Figure 3 shows a schematic overview of a light line;
Figure 4 shows a schematic overview of an embodiment according to the invention of the device for controlling a power of several lights in three light lines; and,
Figure 5 shows a schematic overview of a further embodiment with an input for receiving information from an external device.

### Detailed description of the invention

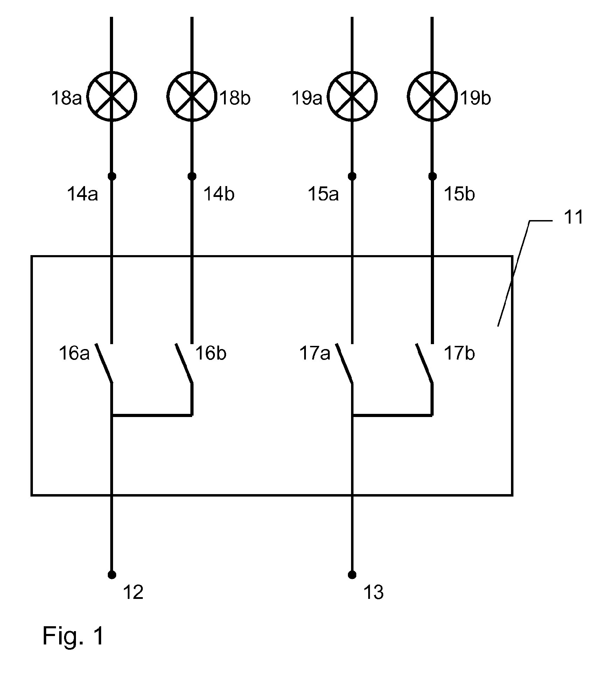

In figure 1 a first embodiment of the invention is depicted. The device 11 for controlling a power of several lights comprises a first phase input 12 and a second phase input 13 for receiving a voltage from an external power supply, for example, an electrical power grid.

A first output 14a connects a first light 18a with the first phase input 12, via a first phase switch 16a. Via another first phase switch 16b, a second output 14b connects a second light 18b also with the first phase input 12. A third output 15a connects a third light 19a with the second phase input 13, via a second phase switch 17a. Via another second phase switch 17b, a fourth output 15b connects a fourth light 19b also with the second phase input 13. Each of the switches 16a, 16b, 17a and 17b is arranged to electrically connect its respective light with each respective phase input when switched on and to electrically disconnect when switched off. The switching can be done in several way, for example electronically with relays, or with a mechanical switch.

The device 11 is constructed to control a power of the lights 18a, 18b, 19a and 19b by switching the switches 16a, 16b, 17a and 17b. Device 11 is constructed to switch on or off the first phase switch 16a together with the second phase switch 17a and to switch on or off the first phase switch 16b together with the second phase switch 17b. For this purpose the first phase switch 16a can be mechanically connected to the second phase switch 17a and the first phase switch 16b can be mechanically connected to the second phase switch 17b. In this way, device 11 is constructed to switch on or off an equal number of first phase switches and second phase switches.

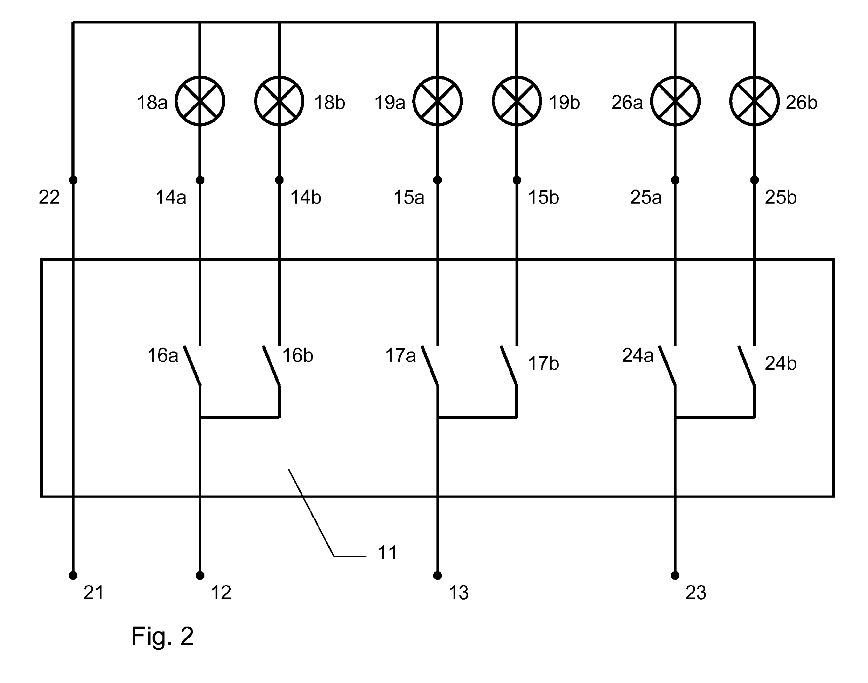

In figure 2, a further embodiment of the invention is shown. The device 11 further comprises a third phase input 23 for receiving a power from a third phase from an external power supply, for example, an electrical power grid. A fifth output 25a connects a fifth light 26a with the third phase input 23, via a third phase switch 24a. Via another third phase switch 24b, a sixth output 25b connects a sixth light 26b also with the third phase input 23. A neutral input 21 for receiving a neutral line from the external power supply and a neutral output 22 for connecting each light to the neutral input are also shown in figure 2

The device 11 is constructed to control a power of the lights 26a and 26b by switching the third phase switches 24a and 24b. First phase switch 16a is switched together with the second phase switch 17a and the third phase switch 24a. Likewise, first phase switch 16b is switched together with the second phase switch 17b and the third phase switch 24b. For this purpose the first phase switch 16a can be mechanically, for example in one relay, connected to the second phase switch 17a and the third phase switch 24a and the first phase switch 16b can be mechanically, for example in one relay, connected to the second phase switch 17b and the third phase switch 24b. In this way, device 11 is arranged to switch on or off an equal number of first phase switches, second phase switches and third phase switches.

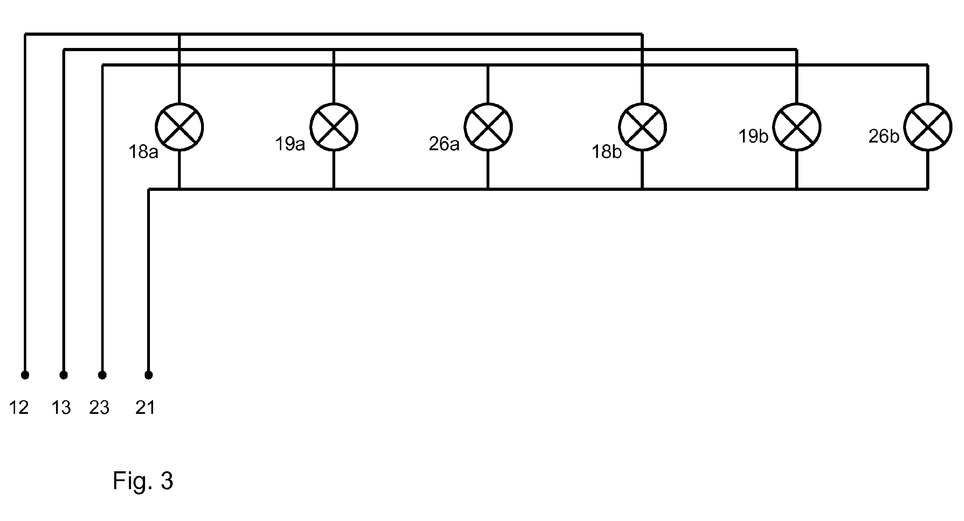

In figure 3, a well known light line has been depicted. In many buildings, illumination of rooms is provided by a number of these light lines. In the situation of figure 3, device 11 has not been applied and lights 18a, 18b are connected directly to the first phase input 12. In a similar way, light 19a and 19b are connected directly to the second phase input 13 and lights 26a and 26b are connected directly to the third phase input 23. Each light is also connected to the neutral input 21. As can be seen from figure 3, adjacent lights are normally connected to different phase inputs.

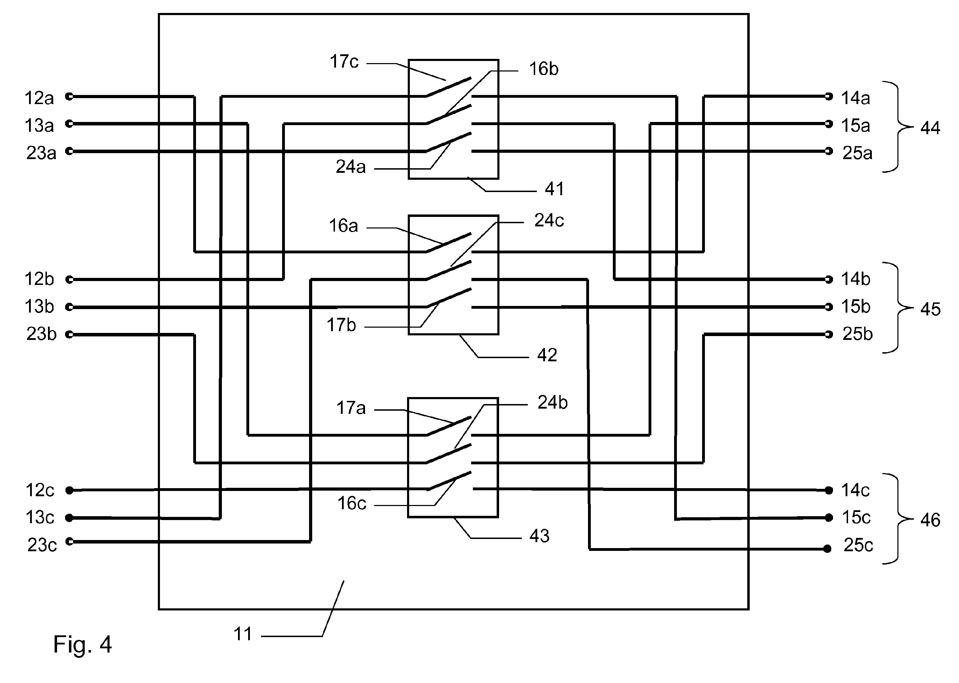

In figure 4, a schematic overview of an embodiment of the device for controlling a power of several lights has been depicted, wherein the lights are part of three light lines being connected to three phase input cables. When the device 11 device for controlling a power of several lights would not be installed, the first phase inputs 12a, 12b, 12c are connected directly to the respective phase cables of the light lines, which are to be connected to 14a, 14b, 14c. The same applies for the second phase inputs 13a, 13b and 13c and the third phase inputs 23a, 23b, 23c. They would be directly connected to the respective phase cables of the light lines, which are to be connected to 15a, 15b, 15c and 25a, 25b, 25c.

As light lines 44, 45, 46 are not shown in figure 4, the numbers 44, 45, 46 refer to the points of connection of each light line. Each light lines 44, 45, or 46 is to be connected to an output connected to a first phase input, a second phase input, and a third phase input. The light lines may be similar to the light line depicted in figure 3.

According to the invention, the device 11 for controlling a power of several lights is placed between the phase inputs and the outputs, as is shown in figure 4. It is an advantage of the invention that device 11 can easily be placed in an existing building, by simply interrupting the installed light line cables and placing the device in between.

In a similar way as has been depicted in figure 2, switches are placed between each phase input and their respective output. As can be seen in figure 4 the switches have been grouped in three groups 41, 42, and 43. Each group comprises a first, a second and a third phase switch. Also, each group comprises a switch connected to a first light line 44, a switch connected to a second light line 45 and a switch connected to a third light line 46.

According to the invention, the switches which are grouped together (for example switch 17c, 16b and 24a are grouped together in group 41) can switch on or off lights in a substantially simultaneous manner. It can be seen from figure 4 and the following example that when a group of switches is switched on or off, the load increase or load decrease is evenly distributed among the phases of the phase input and also evenly distributed among the light lines.

In the following example it is assumed that each output (14a/b/c, 15a/b/c and 25a/b/c) is connected to two lights and that each switch is switched on. If less illumination is required, a user could, for example, switch off group 41, i.e. switch off switches 17c, 16b and 24a, which will result in switching off six lights. As can been seen in figure 4, two lights connected to the first phase input 12b will be switched off, two lights connected to the second phase inputs 13c will be switched off and two lights connected to the third phase input 23a will be switched off. It can also be seen from figure 4, that two lights of second light line 45 will be switched off, two lights of third light line 46 will be switched off and two lights of first light line 44 will be switched off. From figure 3 it is clear that the two lights of each light line that will be switched off, are placed separately. Therefore the decrease of illumination will be distributed evenly across the room.

It can be understood for the above, that according to the invention any number of lights and light lines can be connected to the device 11. However, in order to distribute the power evenly among the phase inputs, the device 11 should switch a substantially equal number of first, second and third phase switches, each with a substantially equal load connected to them. For this purpose, groups are formed by connecting one first, one second and one third phase switch, mechanically or electronically. When a group is switched off or on, the load difference is distributed evenly among the phase inputs.

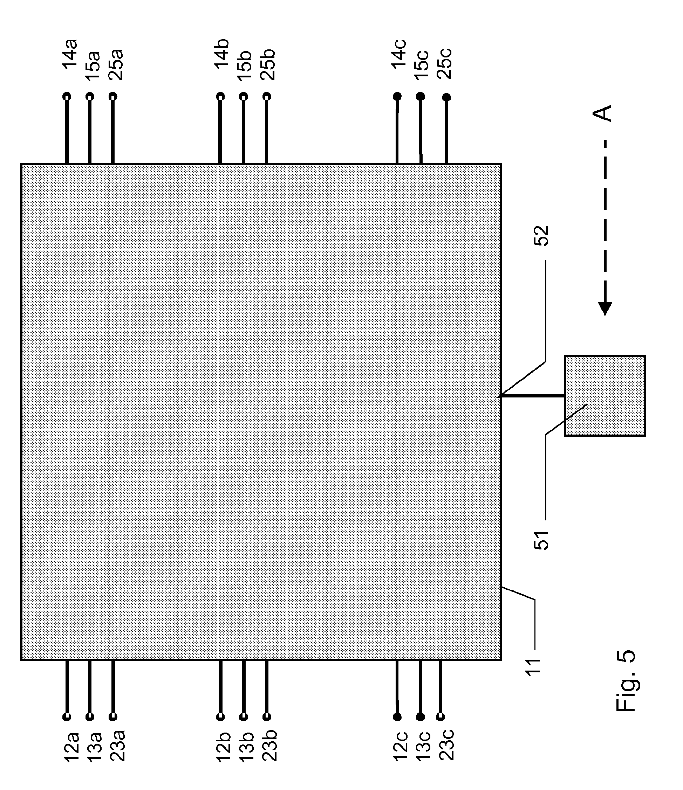

In figure 5, a further embodiment according to the invention is depicted. The device 11 for controlling a power of several lights comprises an input 51 for receiving information and a determination device (not shown in figure 5) for determining a minimal light intensity and a maximum light intensity. The input 51 can comprise different kinds of inputs, of which examples are given below.

For example, the input 51 comprises a light intensity input for receiving information about a detected light intensity, indicated by arrow A. The determination device may comprise a microchip, for example, which compares the value of the detected light intensity with the values of a predefined minimal light intensity and a predefined maximum light intensity. The device 11 is arranged to switch on lights, when the detected light intensity is lower than the minimum light intensity and to switch off lights when the detected light intensity is higher then the maximum light intensity. The device 11 will switch an equal number of first, second and third phase switches.

In another embodiment of the invention, the input 51 comprises a time information input for receiving information about a measured time, for example from a clock. The determination device may change the value of the minimum and maximum light intensity for a predefined period, for example during night time.

In another embodiment of the invention, the input 51 comprises a detection input for receiving information about a detected motion and/or sound produced by, for example an employee. The determination device may change the minimum and maximum to a predefined value when the presence of an employee has been detected.

In further embodiment of the invention, the determination devices calculates the minimum and maximum light intensity on the basis of a predefined margin and an adaptable desired light intensity. The device 11 for controlling a power of several lights may comprise an adjustment knob. By the adjustment knob a user could change the desired light intensity.

It can be understood that the input 51 could comprise other kinds of inputs for receiving other kinds of information, on the basis of which the determination device would change the values of the minimal light intensity and the maximum light intensity.

In a further embodiment the device 11 for controlling a power of several lights also comprises a fail-safe circuitry. The fail-safe circuitry enables that in case of failure of one of the switches, the lights, to which the malfunctioning switch is connected, will be switched on or off, according to local regulations. For example, if the lights should be switched on in the case of a failure, the switches may comprise NC (normal-closed) relay which connect the phase input with the respective output, when the device 11 suffers from a power cut. If the lights should be switched off in the case of a failure, the switches may comprise NO (normal open) relay, which disconnect the phase input with the respective output, when the device 11 suffers from a power cut.

## Claims

1. Device for controlling a power of several lights comprising:
a first, a second and a third phase input for receiving a power from a first, a second and a third phase voltage from an external power supply;
a first output (14a) for connecting a first light via a first phase switch (16a) to the first phase input (12a);
a second output (14b) for connecting a second light via a first phase (16b) switch to the first phase input (12b);
a third output (14c) for connecting a third light via a first phase switch (16c) to the first phase input (12c);
a fourth output (15a) for connecting a fourth light via a second phase switch (17a) to the second phase input (13a);
a fifth output (15b) for connecting a fifth light via a second phase switch (17b) to the second phase input (13b);
a sixth output (15c) for connecting a sixth light via a second phase switch (17c) to the second phase input (13c);
a seventh output (25a) for connecting a seventh light via a third phase (24a) switch to the third phase input (23a);
an eighth output (25b) for connecting an eighth light via a third phase (24b) switch to the third phase input (23b);
a ninth output (25c) for connecting a ninth light via a third phase (24c) switch to the third phase input (23c);
wherein a substantially equal load is connected to each of the first, second and third switches,
**characterized in that,**
the phase switches are grouped into three groups (41, 42, 43), wherein each group (41, 42, 43) comprises a first, a second and a third phase switch;
the first, fourth and seventh lights are part of a first light line (44); the second, fifth and eighth lights are part of a second light line (45); the third, sixth and ninth lights are part of a third light line (46);
the device for controlling a power of several lights is constructed to switch on a substantially equal number of first, second and third phase switches in a group substantially simultaneously.

2. Device for controlling a power of several lights according to claim 1 , wherein the switches electronically or mechanically connect electrically each light and its respective phase input when switched on and electrically disconnect when switched off.

3. Device for controlling a power of several lights according to one of the claims 1-2, further comprising:
a neutral input for receiving a neutral line from the external power supply; and
a neutral output for connecting each light to the neutral input.

4. Device for controlling a power of several lights according to one of the claims 1-3 further comprising:
a light intensity input for receiving information about a detected light intensity; and
a determination device for determining a minimal light intensity and a maximum light intensity; wherein,
the device for controlling a power of several lights switches on a substantially equal number of first, second and third phase switches, when the detected light intensity is lower than the minimum light intensity and switches off a substantially equal number of first, second and
third phase switches when the detected light intensity is higher then the maximum light intensity.

5. Device for controlling a power of several lights according to claims 4, further comprising:
a time information input for receiving information about a measured time, and
a input device for inputting a first and a second period,
wherein,
the minimum and maximum light intensity equals respectively a first minimum and a first maximum value, when the measured time is part of the first period, and, the minimum and maximum light intensity equals respectively a second minimum and a second maximum value, when the measured time is part of the second period.

6. Device for controlling a power of several lights according to one of the claims 1-5, further comprising:
a detection input for receiving information about a detected motion and/or sound,
wherein,
the device is constructed to switch on lights when a motion and/or sound detection signal has been received via the detection input.

7. Device for controlling a power of several lights according to one of the claims 4-7, further comprising:
a input device for inputting a desired light intensity and a margin,
wherein,
the minimum light intensity equals the desired light intensity minus the margin and the maximum light intensity equals the desired light intensity plus the margin.

8. Method for controlling a power of several lights comprising the following steps:
(a) connecting a first light via a first phase switch (16a) to the first phase input (12a);
(b) connecting a second light via a first phase switch (16b) to the first phase input (12b);
(c) connecting a third light via a first phase switch (16c) to the first phase input (12c);
(d) connecting a fourth light via second phase (17a) switch to the second phase input (13a);
(d) connecting a fifth light via a second phase (17b) switch to the second phase input (13b);
(e) connecting a sixth light via a second phase (17c) switch to the second phase input (13c);
(f) connecting a seventh light via third phase (24a) switch to the second phase input (23a);
(g) connecting an eighth light via third phase (24b) switch to the second phase input (23b);
(h) connecting a ninth light via third phase (24c) switch to the second phase input (23c);
(i) grouping the phase switches into three groups (41, 42, 43), wherein each group (41, 42, 43) comprises a first, a second and a third phase switch
(j) switching on an substantially equal number of first phase switches, second phase and third phase switches in a group substantially simultaneously;
wherein:
the first, fourth and seventh lights are part of a first light line (44); the second, fifth and eighth lights are part of a second light line (45); the third, sixth and ninth lights are part of a third light line (46); and; a substantially equal load is connected to each of the first, second and third switches.
